(19) **Europäisches Patentamt**
**European Patent Office**
**Office européen des brevets**

(11) **EP 1 460 448 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(51) Int Cl.:
*G01S 3/786* *(2006.01)*    *G01J 1/42* *(2006.01)*
*G01S 3/783* *(2006.01)*    *B60H 1/00* *(2006.01)*
*G01S 3/78* *(2006.01)*

(21) Anmeldenummer: **04006197.0**

(22) Anmeldetag: **16.03.2004**

(54) **Vorrichtung zum Erfassen des Standes einer Lichtquelle, Verfahren zum Abgleichen der Vorrichtung und Verfahren zum Erfassen des Standes einer Lichtquelle**

Apparatus for Determining the State of a Light Source, Method for Calibrating this Apparatus and Method of Determining the State of the Light Source.

Dispositif de détermination de l'état d'une source lumineuse, procédé de calibration de ce dispositif et procédé pour déterminer l'état d'une source lumineuse

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.03.2003 DE 10312311**

(43) Veröffentlichungstag der Anmeldung:
**22.09.2004 Patentblatt 2004/39**

(73) Patentinhaber: **Behr-Hella Thermocontrol GmbH D-70469 Stuttgart (DE)**

(72) Erfinder:
• **Stich, Bernd, Dr. rer. nat.**
  **33142 Büren (DE)**

• **Nagel, Dirk, Dipl.-Ing.**
  **33100 Paderborn (DE)**
• **Knittel, Otto, Dipl.-Ing.**
  **59494 Soest (DE)**
• **Trapp, Ralph, Dr.-Ing.**
  **33102 Paderborn (DE)**

(74) Vertreter: **Graefe, Jörg et al Fritz Patent- und Rechtsanwälte Ostentor 9 59757 Arnsberg (DE)**

(56) Entgegenhaltungen:
**EP-A- 0 930 512         WO-A-99/24951**
**US-A- 4 769 531         US-A- 5 181 654**
**US-B1- 6 521 882**

**Beschreibung**

Die vorliegende Erfindung betrifft eine Vorrichtung zum Erfassen des Standes einer Lichtquelle bezüglich eines Bezugskoordinatensystems und/oder der Strahlungsintensität der Lichtquelle. Ferner betrifft die Erfindung ein Verfahren zum Abgleichen einer derartigen Vorrichtung und ein Verfahren zum Erfassen des Standes einer Lichtquelle bezüglich des Bezugskoordinatensystems und/oder der Strahlungsintensität der Lichtquelle.

Eine Vorrichtung der eingangs genannten Art umfasst dabei Sensoren zur Erfassung der Lichtstrahlung im sichtbaren Bereich. Eine derartige Vorrichtung ist beispielsweise aus der Druckschrift US 5,072,105 bekannt. Die in dieser Druckschrift offenbarte Vorrichtung weist einen linken Lichtstrahlungssensor, einen rechten Lichtstrahlungssensor und einen horizontalen Lichtstrahlensensor auf um die Menge des Sonnenlichts, welches in einen Fahrzeuginnenraum eines Kraftfahrzeugs einfällt, zu bestimmen, so dass daraus der Flächenwinkel und der Höhenwinkel sowie die Intensität des Sonnenlichts auf der Basis der detektierten Sonnenstrahlungsmenge berechnet werden können. Der Flächenwinkel und der Höhenwinkel werden dabei für die Steuerung der Verteilung der Luft aus einer Klimaanlage verwendet. Die Sensoren der Vorrichtung sind dabei auf einem Haltemittel angeordnet, welches einen Pyramidenstumpf mit einer quadratischen Grundfläche bildet. Dabei ist der horizontale Sensor auf der horizontalen Fläche des Pyramidenstumpfes und der rechte beziehungsweise der linke Sensor auf zwei benachbarten schrägen Flächen des Pyramidenstumpfes angeordnet, wobei die strahlungsempfindlichen Oberflächen jeweils parallel zu den Flächen des Pyramidenstumpfes sind, auf welchen die Sensoren angeordnet sind.

Zur Berechnung des Flächenwinkels beziehungsweise des Höhenwinkels der Lichtquelle sind dann mehrere Berechnungsschritte notwendig, welche unter anderem Fallunterscheidung enthalten. Dieses Verfahren der Berechnung ist umständlich und erfordert einen vergleichsweise hohen programmiertechnischen Aufwand. Ein weiterer Nachteil der in der Druckschrift offenbarten Vorrichtung ist, dass der Flächenwinkel nur in einem begrenzten Winkelbereich erfasst werden kann. Befindet sich die Lichtquelle beispielsweise auf der Seite des Pyramidenstumpfes, auf welcher die Sensoren nicht angeordnet sind, ist eine Berechnung des Flächenwinkels ausgeschlossen.

EP 0 930 512 B1 offenbart eine Vorrichtung mit drei Lichtsensoren. Die elektrische Ausgangsgröße eines jeden Sensors ist abhängig von kosinus des Winkels zwischen des Richtung des Strahlung und der Normalen einer strahlungsempfindlichen Oberfläche des Sensors.

Der Erfindung liegt daher die Aufgabe zugrunde, eine Vorrichtung und ein Verfahren zum Erfassen der Lage und/oder der Intensität einer Lichtquelle vorzuschlagen, wobei die Berechnung deutlich einfacher ist.

Diese Aufgabe wird hinsichtlich der Vorrichtung durch eine Vorrichtung mit den Merkmalen des Anspruchs 1 und hinsichtlich des Verfahrens durch ein Verfahren mit den Merkmalen des Anspruchs 29 gelöst. Ferner wird ein Verfahren zum Abgleichen der erfindungsgemäßen Vorrichtung gemäß Anspruch 33 vorgeschlagen.

Eine erfindungsgemäße Vorrichtung weist ebenfalls drei Lichtsensoren auf. Die Sensoren erzeugen bei einfallendem Licht eine elektrische Ausgangsgröße. Die Ausgangsgröße eines jeden Sensors ist abhängig von dem Kosinus des Winkels zwischen der Richtung des Vektors des einfallenden Lichts und der Normalen einer strahlungsempfindlichen Oberfläche des Sensors. Außerdem sind die Normalen der drei Sensoren linear unabhängig voneinander. Schließlich weist eine erfindungsgemäße Vorrichtung Berechnungsmittel auf, mit welcher der Vektor des einfallenden Lichts in Abhängigkeit von Winkeln, welche die Lage der strahlungsempfindlichen Oberfläche der Sensoren kennzeichnen, aus den elektrischen Ausgangsgrößen berechenbar ist.

Gemäß der Erfindung kann den Sensoren je ein Sensorkoordinatensystem zugeordnet sein, wobei diese gegenüber dem der Vorrichtung zugeordneten Bezugskoordinatensystem um einen Vektor verschoben und gedreht sind, wobei die Drehung durch je eine Rotationsmatrix beschrieben wird.

Die ersten Achsen und die zweiten Achsen der Sensorkoordinatensysteme liegen dabei vorteilhaft in der strahlungsempfindlichen Oberfläche der Sensoren, während die dritten Achsen die Normalen auf den strahlungsempfindlichen Oberflächen bilden.

Gemäß der Erfindung können die Sensorkoordinatensysteme und damit verknüpft auch die strahlungsempfindlichen Oberflächen der Sensoren um die dritte Achse des Bezugskoordinatensystems um je 120° zueinander verdreht sein. Außerdem können die Sensorkoordinatensysteme um ihre ersten Achsen um gleiche Winkel von vorzugsweise 10° bis 30° gegenüber der ersten Achse des Bezugskoordinatensystems gedreht sein. Diese Winkel können dabei beispielsweise 20° betragen.

Die Sensoren können durch Sensorbauelemente oder aber durch Sensorbauelemente und weitere Bauelemente gebildet sein. Vorteilhaft handelt es sich bei den Sensorbauelementen um Fotodioden.

Die Sensoren können in je einem ersten Zweig elektrisch parallel zu je einem zweiten Zweig mit einem Kondensator geschaltet sein. Ferner können die ersten Zweige elektrisch parallel zu je einem dritten Zweig mit einem einstellbaren ohmschen Widerstand geschaltet sein. In Reihe zu dem einstellbaren Widerstand des dritten Zweigs kann ein nicht einstellbarer ohmscher Widerstand geschaltet sein.

Ferner kann in Reihe zu jedem ersten und gegebenenfalls zu jedem zweiten beziehungsweise dritten Zweig ein vierter Zweig mit einem einstellbaren ohmschen Widerstand geschaltet sein. In Reihe zu diesem einstellbaren ohmschen Widerstand kann in dem vierten Zweig ein nicht einstellbarer ohmscher Widerstand geschaltet sein. Die nicht einstellbaren Widerstände des dritten beziehungsweise vierten Zweigs können dabei als Messwiderstände dienen.

Die Reihenschaltung aus viertem Zweig und erstem Zweig, sowie gegebenenfalls zweitem und drittem Zweig kann an eine Spannungsquelle mit einer Betriebsspannung angeschlossen sein. Diese Betriebsspannung kann beispielsweise 5V betragen.

Parallel zu den Reihenschaltungen aus viertem Zweig und erstem Zweig sowie gegebenenfalls zweitem und drittem Zweig kann ein Kondensator geschaltet sein.

Die Sensoren sind vorteilhaft auf einem Haltemittel angeordnet. Das Haltemittel weist Flächen auf, auf welchem die Sensoren befestigt sind. Die Flächen können dabei parallel zu den strahlungsempfindlichen Oberflächen der Sensoren liegen.

Die Vorrichtung kann ein zumindest teilweise lichtdurchlässiges Gehäuse aufweisen.

Eine erfindungsgemäße Vorrichtung kann als Berechnungsmittel einen Mikroprozessor umfassen. An dem Mikroprozessor können dann die elektrischen Ausgangsgrößen der Sensoren anliegen. Dieses kann unter der Zwischenschaltung von Analog-Digital-Wandlern erfolgen.

Der Mikroprozessor kann so eingerichtet sein, dass ein aus den Ausgangsgrößen der Sensoren gebildeter Vektor mit der Inversen einer Matrix multipliziert wird, um den Vektor des einfallenden Lichts zu erhalten, wobei die Matrix die Drehwinkel der Sensorkoordinatensysteme bezüglich des Bezugskoordinatensystems umfasst. Vorteilhaft wird die Matrix folgendermaßen definiert:

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

wobei $\alpha_1$, $\alpha_2$, $\alpha_3$ die Drehwinkel der Sensorkoordinatensysteme um die zweite Achse des Bezugskoordinatensystems, $\beta_1$, $\beta_2$, $\beta_3$ die Drehwinkel der Sensorkoordinatensysteme um die dritte Achse des Bezugskoordinatensystems und $y_1$, $y_2$, $y_3$ die Drehwinkel der Sensorkoordinatensysteme um die erste Achse des Bezugskoordinatensystems sind.

Der Mikroprozessor kann so eingerichtet sein, dass aus dem Vektor des einfallenden Lichts der Höhenwinkel der Lichtquelle bezüglich des Bezugskoordinatensystems berechnet wird, wobei vorteilhaft der Höhenwinkel

$$\phi = \arctan\left(\sqrt{\frac{s_x^2 + s_y^2}{s_z}}\right)$$

mit $s_x$, $s_y$, $s_z$ als Komponenten des Strahlungsvektors ist.

Ebenso ist es möglich, dass der Mikroprozessor so eingerichtet ist, dass aus dem Vektor des einfallenden Lichts der Flächenwinkel der Lichtquelle bezüglich des Bezugskoordinatensystems berechnet wird, wobei dabei vorteilhaft der Flächenwinkel

$$\varphi = \arctan\left(\frac{s_y}{s_x}\right)$$

ist.

Außerdem kann der Mikroprozessor so eingerichtet sein, dass aus dem Vektor des einfallenden Lichts die Strahlungsintensität berechnet wird, wobei vorteilhaft die Intensität

$$I = \sqrt{s_x{}^2 + s_y{}^2 + s_z{}^2}$$

ist.

Das erfindungsgemäße Verfahren zum Abgleichen einer Vorrichtung der vorgenannten Art umfasst einen Schritt, in dem die Vorrichtung in eine Abgleichvorrichtung eingesetzt wird und in der Abgleichvorrichtung von einer Lichtquelle angeregt wird, welche ein homogenes und diffuses Licht aussendet. Die einstellbaren Widerstände werden dann auf Widerstandswerte eingestellt, so dass die Ausgangsgrößen der Sensoren einen vorgegebenen Wert haben. Vorteilhaft werden die Ausgangsgrößen der Sensoren vor dem Einstellen der Widerstandswerte gemessen. Dann können die Widerstandswerte auf die die einstellbaren Widerstände eingestellt werden, in Abhängigkeit der gemessenen Ausgangsgrößen vor dem einstellen der Widerstandswerte berechnet werden. Bei einer Abgleichvorrichtung, welche für das erfindungsgemäße Abgleichverfahren verwendet wird, kann es sich um eine Ulbrichtkugel handeln.

Ausführungsbeispiele für eine erfindungsgemäße Vorrichtung zum Erfassen des Standes und der Intensität einer Lichtquelle ist anhand der Zeichnung näher beschrieben. Darin zeigt

Fig. 1      eine schematische Draufsicht einer erfindungsgemäßen Vorrichtung mit eingetragenen Koordinatensystemen,

Fig. 2      eine schematische Seitenansicht eines Sensors der Vorrichtung gemäß Fig. 1,

Fig. 3a      eine Frontansicht einer erfindungsgemäßen Vorrichtung,

Fig. 3b      eine Draufsicht auf die erfindungsgemäße Vorrichtung gemäß Fig. 3a,

Fig. 3c      eine Seitenansicht der erfindungsgemäßen Vorrichtung gemäß Fig. 3a und 3b,

Fig. 4      einen elektrischen Schaltplan der Beschaltung eines Sensors und

Fig. 5      einen elektrischen Schaltplan einer erfindungsgemäßen Vorrichtung.

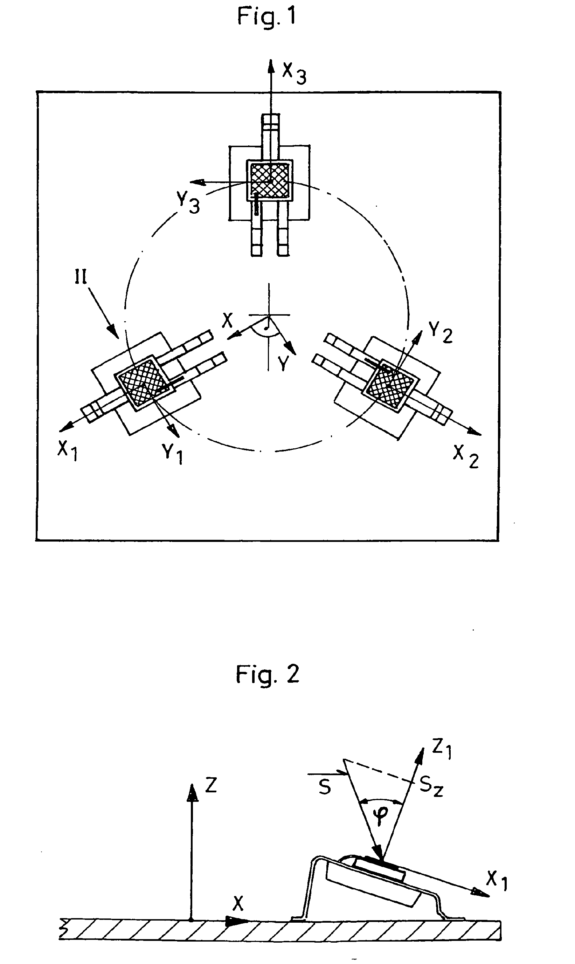

Anhand der schematischen Darstellung der Fig. 1 und der Fig. 2 wird der der Erfindung zugrundeliegende Gedanke erläutert. In Fig. 1 sind drei Sensoren $D_1$, $D_2$, $D_3$, bei denen es sich um Fotodioden handelt, dargestellt. Diese sind auf einer Grundplatte befestigt. In die Mitte dieser Grundplatte ist ein Bezugskoordinatensystem mit den Achsen x, y und z als erste, zweite beziehungsweise dritte Achse gelegt. Die x- und y-Achse liegen dabei in der Fläche der Grundplatte, während die z-Achse senkrecht auf dieser Grundplatte steht.

Die drei Sensoren weisen jeweils eine strahlungsempfindliche Oberfläche auf. In die Mitte dieser strahlungsempfindlichen Oberflächen der Sensoren $D_1$, $D_2$, $D_3$ sind jeweils Sensorkoordinatensysteme gelegt. Die Achsen des Sensorkoordinatensystems der ersten Diode haben dabei die Bezeichnung $x_1$, $y_1$ und $z_1$ für die erste, zweite beziehungsweise dritte Achse des Koordinatensystems. Die Koordinatenachsen des Sensorkoordinatensystems, welches in die Mitte der strahlungsempfindlichen Oberfläche der zweiten Diode gelegt ist, sind $x_2$, $y_2$ und $z_2$ für die erste, zweite beziehungsweise dritte Achse. Die Koordinatenachsen des dem dritten Sensor $D_3$ zugeordneten Sensorkoordinatensystems lauten in entsprechender Weise $x_3$, $y_3$ und $z_3$ für die erste, zweite beziehungsweise dritte Koordinatenachse. Bei den Sensorkoordinatensystemen wie auch bei dem Bezugskoordinatensystem handelt es sich im übrigen um kartesische Koordinatensysteme.

Die Sensorkoordinatensysteme sind gegenüber dem Bezugskoordinatensystem der Vorrichtung sowohl um die zweite, d. h. die y-Achse des Bezugskoordinatensystems um einen Winkel $\alpha_1 = \alpha_2 = \alpha_3 = 20°$ als auch um die dritte Achse, d. h. die z-Achse des Bezugskoordinatensystems gedreht. Die Drehung um die z-Achse beträgt dabei für das Sensorkoordinatensystem des ersten Sensors $\beta_1 = 0°$, für das Sensorkoordinatensystem des zweiten Sensors $\beta_2 = 120°$ und für das Sensorkoordinatensystem des dritten Sensors $\beta_3 = 240°$. Die Drehung der einzelnen Sensorkoordinatensysteme gegenüber dem Bezugskoordinatensystem kann dann durch die folgenden Matrizen beschrieben werden:

$$\bar{R}' = \begin{bmatrix} \cos\alpha_1 \cos\beta_1 & \cos\alpha_1 \sin\beta_1 & -\sin\alpha_1 \\ \sin\gamma_1 \sin\alpha_1 \cos\beta_1 - \cos\gamma_1 \sin\beta_1 & \sin\gamma_1 \sin\alpha_1 \sin\beta_1 + \cos\gamma_1 \cos\beta_1 & \sin\gamma_1 \cos\alpha_1 \\ \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \end{bmatrix}$$

$$\bar{R}'' = \begin{bmatrix} \cos\alpha_2 \cos\beta_2 & \cos\alpha_2 \sin\beta_2 & \sin\alpha_2 \\ \sin\gamma_2 \sin\alpha_2 \cos\beta_2 - \cos\gamma_2 \sin\beta_2 & \sin\gamma_2 \sin\alpha_2 \sin\beta_2 + \cos\gamma_2 \cos\beta_2 & \sin\gamma_2 \cos\alpha_2 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \end{bmatrix}$$

$$\bar{R}''' = \begin{bmatrix} \cos\alpha_3 \cos\beta_3 & \cos\alpha_3 \sin\beta_3 & \sin\alpha_3 \\ \sin\gamma_3 \sin\alpha_3 \cos\beta_3 - \cos\gamma_3 \sin\beta_3 & \sin\gamma_3 \sin\alpha_3 \sin\beta_3 + \cos\gamma_3 \cos\beta_3 & \sin\gamma_3 \cos\alpha_3 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

Der Ursprung jedes Sensorkoordinatensystems ist gegenüber dem Ursprung des Bezugskoordinatensystems um einen Vektor $\bar{E}_1$, $\bar{E}_2$, beziehungsweise $\bar{E}_3$ verschoben. Diese Vektoren $\bar{E}_1$ $\bar{E}_2$ und $\bar{E}_3$ haben dabei eine gleiche Länge und eine gleiche Komponente in die z-Richtung des Bezugskoordinatensystems. Der Vektor $\bar{E}_1$, welcher von dem Ursprung des Bezugskoordinatensystems auf den Ursprung des Sensorkoordinatensystems des ersten Sensors zeigt liegt dabei in der x-z-Ebene des Bezugskoordinatensystems, so dass er keine y-Komponente bezüglich des Bezugskoordinatensystems aufweist. Der Vektor $\bar{E}_2$, welcher von dem Ursprung des Bezugskoordinatensystems auf den Ursprung des Sensorkoordinatensystems des zweiten Sensors $D_2$ weist, ist gegenüber diesem ersten Vektor $\bar{E}_1$ um die z-Achse des Bezugskoordinatensystems um 120° gedreht. Der Vektor $\bar{E}_3$, welcher von dem Ursprung des Bezugskoordinatensystems zum Ursprung des Sensorkoordinatensystems des dritten Sensors $D_3$ weist x gegenüber dem Vektor $\bar{E}_1$, eine Drehung um 240° um die z-Achse des Bezugskoordinatensystems auf.

Das von einer Lichtquelle auf die erfindungsgemäße Vorrichtung einstrahlende Licht kann mit einem Vektor $\bar{S}$ im Bezugskoordinatensystem mit den Koordinaten des Endpunktes $s_x$, $s_y$, $s_z$ beschrieben werden. Dieser Vektor $\bar{S}$ lässt sich jedoch nicht nur in dem Bezugskoordinatensystem angeben, vielmehr kann der Vektor $\bar{S}$ auch in jedem der Sensorkoordinatensysteme angegeben werden. Dabei ergibt sich für das Sensorkoordinatensystem des ersten Sensors $D_1$ folgende Abbildungsgleichung:

$$\bar{S}_1 = \begin{pmatrix} s_{x1} \\ s_{y1} \\ s_{z1} \end{pmatrix} = R_1 \ \bar{S} - \bar{E}_1$$

In analoger Weise ergibt sich für den Vektor $\bar{S}$ im Sensorkoordinatensystem des zweiten beziehungsweise dritten Sensors $D_2$, $D_3$ jeweils eine der folgenden Gleichungen:

$$\bar{S}_2 = \begin{pmatrix} s_{x2} \\ s_{y2} \\ s_{z2} \end{pmatrix} = R_2 \ \bar{S} - \bar{E}_2$$

$$\vec{S}_3 = \begin{pmatrix} s_{x3} \\ s_{y3} \\ s_{z3} \end{pmatrix} = R_3 \ \vec{S} - \vec{E}_3$$

Da bekannt ist, dass bei der bevorzugten Anwendung der erfindungsgemäßen Vorrichtung für die Messung des Standes der Sonne das einfallende Sonnenlicht homogen und parallel und somit das auf die Sensoren einfallende Licht sowohl hinsichtlich der Richtung als auch des Betrages gleich ist, werden die vorstehenden Gleichungen durch Vernachlässigung des Translationsvektor $\overline{E}_1$, $\overline{E}_2$, beziehungsweise $\overline{E}_3$ vereinfacht. Die Gleichungen vereinfachen sich daher zu den folgenden Gleichungen:

$$\vec{S}_1 = \begin{pmatrix} s_{x1} \\ s_{y1} \\ s_{z1} \end{pmatrix} = R_1 \cdot \vec{S}$$

$$\vec{S}_2 = \begin{pmatrix} s_{x2} \\ s_{y2} \\ s_{z2} \end{pmatrix} = R_2 \cdot \vec{S}$$

$$\vec{S}_3 = \begin{pmatrix} s_{x3} \\ s_{y3} \\ s_{z3} \end{pmatrix} = R_3 \cdot \vec{S}$$

Die z-Komponente $s_{z1}$ des Vektors $\overline{S}$ (Fig. 2) ist die Projektion des Vektors $\overline{S}_1$ auf die Achse $z_1$ des Sensorkoordinatensystems des ersten Sensors $D_1$ und ergibt sich zu:

$$s_{z1} = \vec{S} \cdot \vec{e}_{z1} = |\vec{S}| \cdot |\vec{e}_{z1}| \cdot \cos \varphi_1 = |\vec{S}| \cos \varphi_1$$

In analoger Weise ergeben sich die z-Komponenten des Vektors $\overline{S}$ bezüglich der Sensorkoordinatensysteme des zweiten Sensors $D_2$ und des dritten Sensors $D_3$ zu:

$$s_{z2} = \vec{S} \cdot \vec{e}_{z2} = |\vec{S}| \cdot |\vec{e}_{z2}| \cos \varphi_2 = |\vec{S}| \cos \varphi_2$$

$$s_{z3} = \vec{S} \cdot \vec{e}_{z3} = |\vec{S}| \cdot |\vec{e}_{z3}| \cos \varphi_3 = |\vec{S}| \cos \varphi_3$$

Ferner ist von den Sensoren $D_1$, $D_2$ und $D_3$ bekannt, dass die elektrischen Ströme $I_{D1}$, $I_{D2}$, $I_{D3}$, welche bei einer Bestrahlung der Sensoren $D_1$, $D_2$, $D_3$ erzeugt werden, linear abhängig von dem Kosinus des Winkels $y_1$, $y_2$, $y_3$ zwischen dem Vektor $\overline{S}$ des eingefallenen Lichts und der z-Achse der Sensorkoordinatensysteme ist. Ein Proportionalitätsfaktor zwischen den Strömen und dem Kosinus ist dabei der Betrag des Vektors $\overline{S}$, ein anderer eine sensortypische Konstante $K_1$, $K_2$, $K_3$ Damit ergeben sich die folgenden Gleichungen:

$$I_{D1} = K_1 \left| \overline{S} \right| \cos \varphi_1$$

$$I_{D2} = K_2 \left| \overline{S} \right| \cos \varphi_2$$

$$I_{D3} = K_3 \left| \overline{S} \right| \cos \varphi_3$$

Durch Gleichsetzen erhält man für die Sensorströme dann die folgenden Gleichungen:

$$I_{D1} = K_1 \, s_{z1}$$

$$I_{D2} = K_2 \, s_{z2}$$

$$I_{D3} = K_3 \, s_{z3}$$

aus welchen sich das folgende Gleichungssystem aufstellen lässt:

$$\begin{pmatrix} I_{D1} \\ I_{D2} \\ I_{D3} \end{pmatrix} = A \cdot \begin{pmatrix} s_x \\ s_y \\ s_z \end{pmatrix} \Leftrightarrow \overline{I} = A \cdot \overline{S}$$

mit

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

Dieses Gleichungssystem lässt sich eindeutig lösen, wenn die sich daraus ergebenden Gleichungen linear unabhängig sind. D. h. die Ausrichtung der z-Achsen der Sensorkoordinatensysteme und damit der strahlungsempfindlichen Flächen der Sensoren $D_1$, $D_2$, $D_3$ im Raum muss unterschiedlich und bekannt sein. Durch Auflösen der Matrixgleichung

$$\vec{S} = A^{-1} \cdot \vec{I}$$

lassen sich die Komponenten des Vektors $\overline{S}$ ermitteln, woraus dann wiederum gemäß der folgenden Gleichungen die Raumwinkel $\varphi$ und $\phi$ bezüglich des Bezugskoordinatensystems und die Strahlungsintensität berechnet werden können:

$$\varphi = \arctan\left(\frac{s_y}{s_x}\right)$$

$$\phi = \arctan\left(\frac{\sqrt{s_x^{\,2} + s_y^{\,2}}}{s_z}\right)$$

$$I = \sqrt{s_x^{\,2} + s_y^{\,2} + s_z^{\,2}}$$

Die vorstehenden drei Gleichungen sowie die Gleichung zur Berechnung des Vektors $\overline{S}$ aus den Diodenströmen sind somit ausreichend, um die gesuchten Größen zu berechnen.

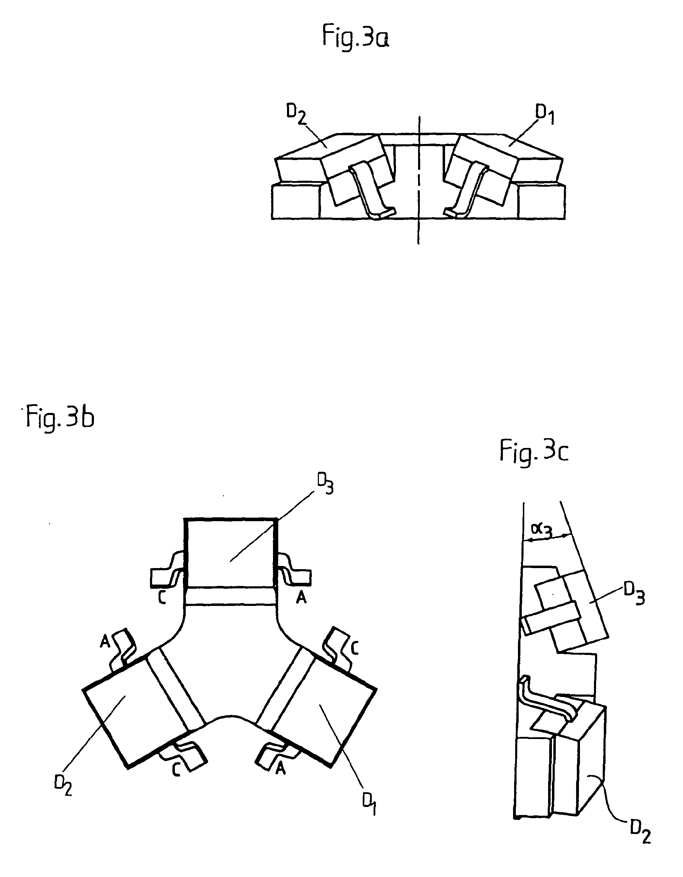

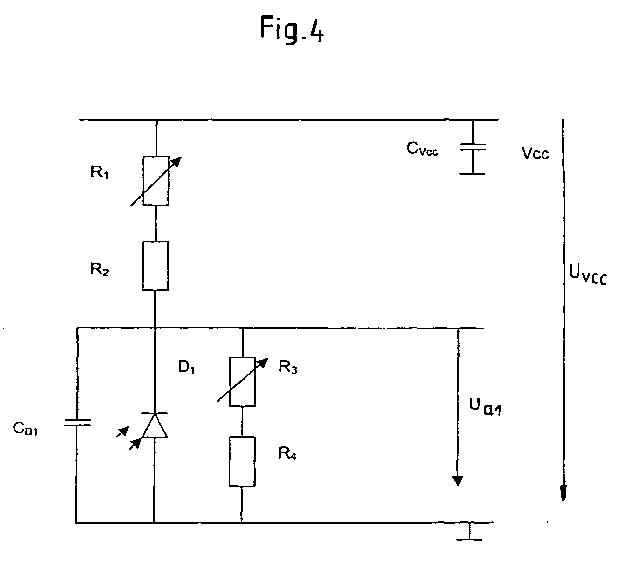

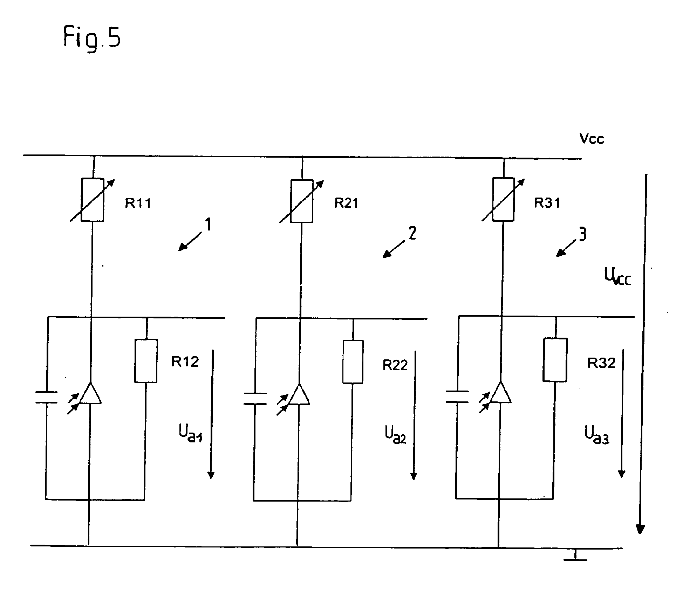

Ein Ausführungsbeispiel für eine erfindungsgemäße Vorrichtung beziehungsweise eines Teils einer erfindungsgemäßen Vorrichtung ist in Fig. 3 dargestellt. Die in Fig. 3 dargestellte erfindungsgemäße Vorrichtung weist ein Haltemittel 4 auf, auf welchem die Sensoren $D_1$, $D_2$, $D_3$ angebracht sind. Das Haltemittel 4 ist dabei y-förmig ausgebildet, wobei die einzelnen Schenkel identisch jedoch um jeweils 120° zueinander versetzt ausgebildet sind ($C_3$-Symmetrie). An den Schenkeln des Haltemittels 4 sind dabei Flächen vorgesehen, auf welchen die Sensoren $D_1$, $D_2$, $D_3$ angebracht sind. Die Flächen sind dabei in einem Winkel von $\alpha_1 = \alpha_2 = \alpha_3 = 20°$ geneigt. Dieser Winkel entspricht dabei dem Winkel, um welchen die Sensorkoordinatensysteme um die y-Achse gedreht sind. Auf den Flächen der Schenkel sind die Sensoren $D_1$, $D_2$, $D_3$, es handelt sich hierbei um Fotodioden, angebracht, wobei die strahlungsempfindliche Fläche der Sensoren $D_1$, $D_2$, $D_3$ parallel zu den Flächen der Haltemittel 4 liegen. Über Anschlussbeinchen a, c sind die Sensoren $D_1$, $D_2$, $D_3$ in einer elektrischen Schaltung integriert, wie sie in Fig. 4 beziehungsweise Fig. 5 dargestellt ist.

In Fig. 4 ist ein Teil der elektrischen Schaltung einer erfindungsgemäßen Vorrichtung dargestellt, wobei es sich bei diesem Teil um die einem Sensor zugeordneten Bauelemente handelt. Die Schaltungsteile, welche den anderen beiden Sensoren $D_2$, $D_3$ zugeordnet sind, sind parallel zu dem dargestellten Teil geschaltet und dabei am Massepotential beziehungsweise am Potential VCC = + 5V miteinander verbunden. Der Schaltungsteil gemäß Fig. 4 weist in einem ersten Zweig den Sensor $D_1$ auf. Parallel zu diesem ersten Zweig ist ein zweiter Zweig geschaltet, welcher einen Kondensator $C_{D1}$ umfasst. Parallel zu diesem ersten und dem zweiten Zweig ist weiter ein dritter Zweig geschaltet, welcher die Serienschaltung eines einstellbaren ohmschen Widerstandes $R_3$ und eines ohmschen Widerstandes $R_4$ umfasst. Der erste, zweite und dritte Zweig sind dabei so mit dem Massepotential verbunden, dass die Kathode des Sensors $D_1$ auf Massepotential liegt. Über den ersten, zweiten und dritten Zweig fällt eine Spannung $U_{a1}$ ab, weiche linear abhängig von dem Sensorstrom $I_{D1}$, ist. In Serie zu dem ersten, zweiten und dritten Zweig des Schaltungsteils ist zwischen dem Potential VCC und der Anodenseite des Sensors $D_1$ ein vierter Zweig geschaltet, welcher einen einstellbaren elektrischen Widerstand $R_1$ und einen ohmschen Widerstand $R_2$ umfasst. Parallel zu der Serienschaltung aus dem ersten, zweiten und dritten Zweig einerseits und dem vierten Zweig andererseits ist ein Kondensator $C_{VCC}$ zwischen dem positiven Potential VCC und dem Massepotential geschaltet.

Bei einer Teilschaltung gemäß Fig. 4 bestimmt sich die über dem Sensor $D_1$ abfallende Spannung in Abhängigkeit von dem Strom $I_{D1}$ durch den ersten Sensor $D_1$ zu:

$$U_{a1} = U_{VCC} \frac{R_3 + R_4}{R_1 + R_2 + R_3 + R_4} - I_{D1} \cdot \frac{(R_1 + R_2) * (R_3 + R_4)}{R_1 + R_2 + R_3 + R_4},$$

wobei der Diodenstrom gleich

$$I_{d1} = K_1 \cdot |\bar{S}| \cdot \cos \varphi_1$$

und abhängig von einem sensorspezifischen Faktor $K_1$ ist. Damit die unterschiedlichen Proportionalitätsfaktoren $K_1$, $K_2$ und $K_3$ der drei Sensoren $D_1$, $D_2$, $D_3$ ausgeglichen werden können, wird jede Teilschaltung beziehungsweise die gesamte Schaltung einer erfindungsgemäßen Vorrichtung durch Einstellen der einstellbaren ohmschen Widerstände $R_1$ und $R_3$ abgeglichen.

Bei der in der Fig. 5 dargestellten Zeichnung ist für jede Teilschaltung 1, 2, 3 ein vereinfachter Schaltungsaufbau gewählt. In dem ersten Zweig ist dabei lediglich ein nicht einstellbarer ohmscher Widerstand $R_{12}$, $R_{22}$, $R_{32}$ gewählt, der grundsätzlich aber auch einstellbar sein kann. Dagegen ist in dem vierten Zweig nur ein einstellbarer ohmscher Widerstand $R_{11}$, $R_{21}$, $R_{31}$ eingesetzt.

**Patentansprüche**

1.  Vorrichtung zum Erfassen des Standes $(\Phi, \varphi)$ der Sonne bezüglich eines Bezugskoordinatensystems und der Strahlungsintensität (I) der Sonne umfassend folgende Merkmale:

    - die Vorrichtung weist drei Lichtsensoren $(D_1, D_2, D_3)$ auf,
    - die Sensoren $(D_1, D_2, D_3)$ erzeugen bei einfallendem Licht eine elektrische Ausgangsgröße $(U_{a1}, U_{a2}, U_{a3})$,
    - die Ausgangsgröße eines jeden Sensors $(D_1, D_2, D_3)$ ist abhängig vom Kosinus des Winkels $(\varphi_1, (\varphi_2, \varphi_3)$ zwischen der Richtung der Strahlung und der Normalen einer strahlungsempfindlichen Oberfläche des Sensors,
    - die Normalen der drei Sensoren sind linear unabhängig voneinander,
    - die Vorrichtung weist Berechnungsmittel auf, mit welchen der Vektor $(\bar{S})$ des einfallenden Lichts in Abhängigkeit von Winkeln $(\alpha_1, \alpha_2, \alpha_3, \beta_1, \beta_2, \beta_3, y_1, y_2, y_3)$ aus den elektrischen Ausgangsgrößen berechenbar ist, wobei die Winkel die Lage der strahlungsempfindlichen Oberfläche der Sensoren $(D_1, D_2, D_3)$ kennzeichnen
    - die Vorrichtung umfasst einen Mikroprozessor,
    - der Mikroprozessor ist so eingerichtet, dass ein aus den Ausgangsgrößen $(U_{a1}, U_{a2}, U_{a3})$ der Sensoren $(D_1, D_2, D_3)$ gebildeter Vektor $(\bar{U}_a)$ mit der Inversen einer Matrix (A) multipliziert wird, um den Vektor $(\bar{S})$ des einfallenden Lichts zu erhalten, wobei

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

    $\alpha_1, \alpha_2, \alpha_3$ die Drehwinkel der Sensorkoordinatensysteme um die zweite Achse des Bezugskoordinatensystems, $\beta_1, \beta_2, \beta_3$ die Drehwinkel der Sensorkoordinatensysteme um die dritte Achse des Bezugskoordinatensystems und $y_1, y_2, y_3$ die Drehwinkel der Sensorkoordinatensysteme um die erste Achse des Bezugskoordinatensystems sind
    - der Mikroprozessor so eingerichtet ist, dass aus dem Vektor $(\bar{S})$ des einfallenden Lichts der Höhenwinkel $(\Phi)$, der Flächenwinkel $(\varphi)$ und die Strahlungsintensität (I) der Sonne bezüglich des Bezugskoordinatensystems berechnet wird, wobei der Höhenwinkel

$$\phi = \arctan\left(\frac{\sqrt{s_x^{\,2} + s_y^{\,2}}}{s_z}\right),$$

der Flächenwinkel

$$\varphi = \arctan\left(\frac{s_y}{s_x}\right)$$

und die Strahlungsintensität

$$I = \sqrt{s_x^{\,2} + s_y^{\,2} + s_z^{\,2}}$$

ist.

2. Vorrichtung nach dem vorhergehenden Anspruch, **dadurch gekennzeichnet, dass** den Sensoren je ein Sensorkoordinatensystem zugeordnet sind, die gegenüber dem der Vorrichtung zugeordneten Bezugskoordinatensystem um einen Vektor ($\overline{E}_1$, $\overline{E}_2$, $\overline{E}_3$) verschoben und mittels einer Rotationsmatrix ($R_1$, $R_2$, $R_3$) gedreht sind.

3. Vorrichtung nach dem vorhergehenden Anspruch, **dadurch gekennzeichnet, dass** die ersten Achsen ($x_1$, $x_2$, $x_3$) und die zweiten Achsen ($y_1$, $y_2$, $y_3$) der Sensorkoordinatensysteme in der strahlungsempfindlichen Oberfläche der Sensoren liegen und die dritten Achsen ($z_1$, $z_2$, $z_3$) der Sensorkoordinatensysteme die Normalen auf den strahlungsempfindlichen Oberflächen bilden.

4. Vorrichtung nach Anspruch 2 oder 3, **dadurch gekennzeichnet, dass** Sensorkoordinatensysteme um die dritte Achse des Bezugskoordinatensystems um je 120° zueinander verdreht sind.

5. Vorrichtung nach einem der Ansprüche 2 bis 4, **dadurch gekennzeichnet, dass** die Sensorkoordinatensysteme um ihre zweiten Achsen ($y_1$, $y_2$, $y_3$) um gleiche Winkel ($\alpha_1$, $\alpha_2$, $\alpha_3$) von vorzugsweise 10° bis 30° gegenüber der zweiten Achse (y) des Bezugskoordinatensystems gedreht sind.

6. Vorrichtung nach dem vorhergehenden Anspruch, **dadurch gekennzeichnet, dass** die Winkel ($\alpha_1$, $\alpha_2$, $\alpha_3$) 20° betragen.

7. Vorrichtung nach einem der vorhergehenden Ansprüche, **dadurch gekennzeichnet, dass** Sensoren ($D_1$, $D_2$, $D_3$) durch Sensorbauelemente gebildet sind.

8. Vorrichtung nach einem der Ansprüche 1 bis 6, **dadurch gekennzeichnet, dass** die Sensoren durch Sensorbauelemente und weitere Bauelemente gebildet sind.

9. Vorrichtung nach Anspruch 2 oder 3, **dadurch gekennzeichnet, dass** die Sensorbauelemente Fotodioden sind.

10. Vorrichtung nach einem der vorhergehenden Ansprüche, **dadurch gekennzeichnet, dass** die Sensoren ($D_1$, $D_2$, $D_3$) in je einem ersten Zweig elektrisch parallel zu je einem zweiten Zweig mit einem Kondensator ($C_{D1}$, $C_{D2}$, $C_{D3}$) geschaltet sind.

11. Vorrichtung nach einem der vorhergehenden Ansprüche, **dadurch gekennzeichnet, dass** die ersten Zweige elektrisch parallel zu je einem dritten Zweig mit einem einstellbaren ohmschen Widerstand ($R_{31}$, $R_{32}$, $R_{33}$) geschaltet sind.

**12.** Vorrichtung nach Anspruch 11, **dadurch gekennzeichnet, dass** in Reihe zu dem einstellbaren Widerstand ($R_{31}$, $R_{32}$, $R_{33}$) des dritten Zweigs ein ohmscher Widerstand ($R_{41}$, $R_{42}$, $R_{43}$) geschaltet ist.

**13.** Vorrichtung nach einem der vorhergehenden Ansprüche, **dadurch gekennzeichnet, dass** in Reihe zu jedem ersten und gegebenenfalls zu jedem zweiten beziehungsweise dritten Zweig ein vierter Zweig mit einem einstellbaren ohmschen Widerstand ($R_{11}$, $R_{12}$, $R_{13}$)geschaltet ist.

**14.** Vorrichtung nach Anspruch 13, **dadurch gekennzeichnet, dass** in Reihe zu dem einstellbaren Widerstand ($R_{11}$, $R_{12}$, $R_{13}$) des vierten Zweigs ein ohmscher Widerstand ($R_{21}$, $R_{22}$, $R_{23}$) geschaltet ist.

**15.** Vorrichtung nach Anspruch 13 oder 14, **dadurch gekennzeichnet, dass** die Reihenschaltungen (1, 2, 3) aus viertem Zweig und erstem Zweig sowie gegebenenfalls zweitem und drittem Zweig an eine Spannungsquelle mit einer Betriebsspannung ($U_{VCC}$) angeschlossen ist.

**16.** Vorrichtung nach dem vorhergehenden Anspruch, **dadurch gekennzeichnet, dass** die Betriebsspannung $U_{VCC}$ = 5V beträgt.

**17.** Vorrichtung nach einem der Ansprüche 13 bis 16, **dadurch gekennzeichnet, dass** parallel zu den Reihenschaltungen (1, 2, 3) aus viertem Zweig und erstem Zweig sowie gegebenenfalls zweitem und drittem Zweig ein Kondensator ($C_{VCC}$) geschaltet ist.

**18.** Vorrichtung nach einem der vorhergehenden Ansprüche, **dadurch gekennzeichnet, dass** die Sensoren ($D_1$, $D_2$, $D_3$) auf einem Haltemittel angeordnet sind.

**19.** Vorrichtung nach Anspruch 18, **dadurch gekennzeichnet, dass** das Haltemittel Flächen aufweist, auf welchen die Sensoren ($D_1$, $D_2$, $D_3$) angeordnet sind.

**20.** Vorrichtung nach Anspruch 19, **dadurch gekennzeichnet, dass** die Flächen parallel zu den strahlungsempfindlichen Oberfläche der Sensoren ($D_1$, $D_2$, $D_3$) angeordnet sind.

**21.** Vorrichtung nach einem der vorhergehenden Ansprüche, **dadurch gekennzeichnet, dass** die Vorrichtung ein zumindest teilweise lichtdurchlässiges Gehäuse aufweist.

**22.** Vorrichtung nach einem der vorhergehenden Ansprüche, **dadurch gekennzeichnet, dass** an dem Mikroprozessor die elektrischen Ausgangsgrößen ($U_{a1}$, $U_{a2}$, $U_{a3}$) der Sensoren ($D_1$, $D_2$, $D_3$) anliegen.

**23.** Vorrichtung nach einem der vorhergehenden Ansprüche, **dadurch gekennzeichnet, dass** an dem Mikroprozessor die elektrischen Ausgangsgrößen ($U_{a1}$, $U_{a2}$, $U_{a3}$) der Sensoren ($D_1$, $D_2$, $D_3$) unter Zwischenschaltung von Analog-Digital-Wandlern anliegen.

**24.** Verfahren zum Erfassen des Standes der Sonne bezüglich eines Bezugskoordinatensystems und der Strahlungsintensität (I) der Sonne mittels einer Vorrichtung gemäß Anspruch 1 und insbesondere mittels einer Vorrichtung gemäß einem der Ansprüche 1 bis 23, **gekennzeichnet durch** folgenden Schritt:

die bei Lichteinfall von den Sensoren erzeugten Ausgangsgrößen ($\underline{U}_{a1}$, $U_{a2}$, $U_{a3}$) werden einem Mikroprozessor zugeführt, der einen von den Ausgangsgrößen gebildeten Vektor ($\overline{U}_a$) mit der inversen Matrix (A-1) einer Matrix (A) multipliziert, um den Vektor ($\overline{S}$) des einfallenden Lichts im Bezugskoordinatensystems zu erhalten, wobei

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

ist.

**25.** Verwendung einer Vorrichtung nach einem der Ansprüche 1 bis 23 zum Erfassen des Standes (Φ, φ) der Sonne bezüglich eines Bezugskoordinatensystems und der Strahlungsintensität (I) der Sonne.

**Claims**

**1.** Apparatus for detecting the situation (Φ, φ) of the sun with respect to a reference coordinate system and the radiation intensity (I) of the sun comprising the following features:

- the apparatus has three light sensors ($D_1$, $D_2$, $D_3$),
- the sensors ($D_1$, $D_2$, $D_3$) produce an electrical output variable ($U_{a1}$, $U_{a2}$, $U_{a3}$) in the case of incident light,
- the output variable of any sensor ($D_1$, $D_2$, $D_3$) is dependent on the cosine of the angle ($\varphi_1$, $\varphi_2$, $\varphi_3$) between the direction of the radiation and the normal of a radiation-sensitive surface of the sensor,
- the normals of the three sensors are linearly independent of one another,
- the apparatus has calculation means, with which it is possible to calculate the vector ($\overline{S}$) of the incident light depending on angles ($\alpha_1$, $\alpha_2$, $\alpha_3$, $\beta_1$, $\beta_2$, $\beta_3$, $\gamma_1$, $\gamma_2$, $\gamma_3$) from the electrical output variables, the angles identifying the position of the radiation-sensitive surface of the sensors ($D_1$, $D_2$, $D_3$),
- the apparatus comprises a microprocessor,
- the microprocessor is set up such that a vector ($\overline{U}_a$), which is formed from the output variables ($U_{a1}$, $U_{a2}$, $U_{a3}$) of the sensors ($D_1$, $D_2$, $D_3$), is multiplied by the inverse of a matrix (A) in order to obtain the vector ($\overline{S}$) of the incident light, where

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

$\alpha_1$, $\alpha_2$, $\alpha_3$ are the rotary angles of the sensor coordinate systems about the second axis of the reference coordinate system, $\beta_1$, $\beta_2$, $\beta_3$ are the rotary angles of the sensor coordinate systems about the third axis of the reference coordinate system, and $\gamma_1$, $\gamma_2$, $\gamma_3$ are the rotary angles of the sensor coordinate systems about the first axis of the reference coordinate system,
- the microprocessor is set up such that the angle of altitude (Φ), the plane angle (φ) and the radiation intensity (I) of the sun with respect to the reference coordinate system are calculated from the vector ($\overline{S}$) of the incident light, where the angle of altitude is

$$\phi = \arctan\left(\frac{\sqrt{s_x^2 + s_y^2}}{s_z}\right),$$

the plane angle is

$$\varphi = \arctan\left(\frac{s_y}{s_x}\right)$$

and the radiation intensity is

$$I = \sqrt{s_x^2 + s_y^2 + s_z^2}.$$

2. Apparatus according to the preceding claim, **characterized in that** a sensor coordinate system is associated in each case with the sensors, and these sensor coordinate systems are shifted with respect to the reference coordinate system associated with the apparatus by a vector ($\overline{E}_1$, $\overline{E}_2$, $\overline{E}_3$) and are rotated by means of a rotation matrix ($R_1$, $R_2$, $R_3$).

3. Apparatus according to the preceding claim, **characterized in that** the first axes ($x_1$, $x_2$, $x_3$) and the second axes ($y_1$, $y_2$, $y_3$) of the sensor coordinate systems lie in the radiation-sensitive surface of the sensors, and the third axes ($z_1$, $z_2$, $z_3$) of the sensor coordinate systems form the normals on the radiation-sensitive surfaces.

4. Apparatus according to Claim 2 or 3, **characterized in that** sensor coordinate systems are rotated through in each case 120° with respect to one another about the third axis of the reference coordinate system.

5. Apparatus according to one of Claims 2 to 4, **characterized in that** the sensor coordinate systems are rotated through identical angles ($\alpha_1$, $\alpha_2$, $\alpha_3$) of preferably from 10° to 30° with respect to the second axis (y) of the reference coordinate system about their second axes ($y_1$, $y_2$, $y_3$).

6. Apparatus according to the preceding claim, **characterized in that** the angles ($\alpha_1$, $\alpha_2$, $\alpha_3$) are 20°.

7. Apparatus according to one of the preceding claims, **characterized in that** sensors ($D_1$, $D_2$, $D_3$) are formed by sensor components.

8. Apparatus according to one of Claims 1 to 6, **characterized in that** the sensors are formed by sensor components and further components.

9. Apparatus according to Claim 2 or 3, **characterized in that** the sensor components are photodiodes.

10. Apparatus according to one of the preceding claims, **characterized in that** the sensors ($D_1$, $D_2$, $D_3$) in in each case one first branch are connected electrically in parallel with in each case one second branch with a capacitor ($C_{D1}$, $C_{D2}$, $C_{D3}$).

11. Apparatus according to one of the preceding claims, **characterized in that** the first branches are connected electrically in parallel with in each case one third branch with a variable nonreactive resistor ($R_{31}$, $R_{32}$, $R_{33}$) .

12. Apparatus according to Claim 11, **characterized in that** a nonreactive resistor ($R_{41}$, $R_{42}$, $R_{43}$) is connected in series with the variable resistor ($R_{31}$, $R_{32}$, $R_{33}$) of the third branch.

13. Apparatus according to one of the preceding claims, **characterized in that** a fourth branch with a variable nonreactive resistor ($R_{11}$, $R_{12}$, $R_{13}$) is connected in series with each first and possibly with each second or third branch.

14. Apparatus according to Claim 13, **characterized in that** a nonreactive resistor ($R_{21}$, $R_{22}$, $R_{23}$) is connected in series with the variable resistor ($R_{11}$, $R_{12}$, $R_{13}$) of the fourth branch.

15. Apparatus according to Claim 13 or 14, **characterized in that** the series circuits (1, 2, 3) comprising the fourth branch and the first branch and possibly the second and third branch are connected to a voltage source with an operating voltage ($U_{VCC}$).

16. Apparatus according to the preceding claim, **characterized in that** the operating voltage is $U_{VCC}$ = 5 V.

17. Apparatus according to one of Claims 13 to 16, **characterized in that** a capacitor ($C_{VCC}$) is connected in parallel with the series circuits (1, 2, 3) comprising the fourth branch and the first branch and possibly the second and third branch.

18. Apparatus according to one of the preceding claims, **characterized in that** the sensors ($D_1$, $D_2$, $D_3$) are arranged on a holding means.

19. Apparatus according to Claim 18, **characterized in that** the holding means has faces on which the sensors ($D_1$, $D_2$, $D_3$) are arranged.

**20.** Apparatus according to Claim 19, **characterized in that** the faces are arranged parallel to the radiation-sensitive surfaces of the sensors ($D_1$, $D_2$, $D_3$).

**21.** Apparatus according to one of the preceding claims, **characterized in that** the apparatus has an at least partially transparent housing.

**22.** Apparatus according to one of the preceding claims, **characterized in that** the electrical output variables ($U_{a1}$, $U_{a2}$, $U_{a3}$) of the sensors ($D_1$, $D_2$, $D_3$) are present at the microprocessor.

**23.** Apparatus according to one of the preceding claims, **characterized in that** the electrical output variables ($U_{a1}$, $U_{a2}$, $U_{a3}$) of the sensors ($D_1$, $D_2$, $D_3$), with analogue-to-digital converters interposed, are present at the microprocessor.

**24.** Method for detecting the situation of the sun with respect to a reference coordinate system and the radiation intensity (I) of the sun by means of an apparatus according to Claim 1 and in particular by means of an apparatus according to one of Claims 1 to 23, **characterized by** the following step:

the output variables ($U_{a1}$, $U_{a2}$, $U_{a3}$), which are produced by the sensors in the case of incident light, are supplied to a microprocessor, which multiplies a vector ($\overline{U}_a$), which is formed from the output variables, by the inverse matrix ($A^{-1}$) of a matrix (A) in order to obtain the vector ($\overline{S}$) of the incident light in the reference coordinate system, where

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}.$$

**25.** Use of an apparatus according to one of Claims 1 to 23 for detecting the situation ($\Phi$, $\varphi$) of the sun with respect to a reference coordinate system and the radiation intensity (I) of the sun.

**Revendications**

**1.** Dispositif pour détecter la position ($\Phi$, $\varphi$) du soleil par rapport à un système de coordonnées de référence et l'intensité du rayonnement (I) du soleil comprenant les caractéristiques suivantes :

- le dispositif présente trois détecteurs de lumière ($D_1$, $D_2$, $D_3$),
- en présence d'une lumière incidente, les détecteurs ($D_1$, $D_2$, $D_3$) génèrent une grandeur de sortie électrique ($U_{a1}$, $U_{a2}$, $U_{a3}$),
- la grandeur de sortie de chaque détecteur ($D_1$, $D_2$, $D_3$) dépend du cosinus de l'angle ($\varphi_1$, $\varphi_2$, $\varphi_3$) entre le sens du rayonnement et la normale d'une surface sensible au rayonnement du détecteur,
- les normales des trois détecteurs sont linéaires indépendamment l'une de l'autre,
- le dispositif présente un moyen de calcul qui permet de calculer le vecteur ($\overline{S}$) de la lumière incidente en fonction des angles ($\alpha_1$, $\alpha_2$, $\alpha_3$, $\beta_1$, $\beta_2$, $\beta_3$, $\gamma_1$, $\gamma_2$, $\gamma_3$) à partir des grandeurs électriques, les angles caractérisant la position de la surface sensible au rayonnement des détecteurs ($D_1$, $D_2$, $D_3$),
- le dispositif comprend un microprocesseur,
- le microprocesseur est configuré de manière à multiplier un vecteur ($\overline{U}_a$) formé à partir des grandeurs de sortie ($U_{a1}$, $U_{a2}$, $U_{a3}$) des détecteurs ($D_1$, $D_2$, $D_3$) avec l'inverse d'une matrice (A) afin d'obtenir le vecteur ($\overline{S}$) de la lumière incidente avec

$$A = \begin{bmatrix} \cos\gamma_1 \sin\alpha_1 \cos\beta_1 + \sin\gamma_1 \sin\beta_1 & \cos\gamma_1 \sin\alpha_1 \sin\beta_1 - \sin\gamma_1 \cos\beta_1 & \cos\gamma_1 \cos\alpha_1 \\ \cos\gamma_2 \sin\alpha_2 \cos\beta_2 + \sin\gamma_2 \sin\beta_2 & \cos\gamma_2 \sin\alpha_2 \sin\beta_2 - \sin\gamma_2 \cos\beta_2 & \cos\gamma_2 \cos\alpha_2 \\ \cos\gamma_3 \sin\alpha_3 \cos\beta_3 + \sin\gamma_3 \sin\beta_3 & \cos\gamma_3 \sin\alpha_3 \sin\beta_3 - \sin\gamma_3 \cos\beta_3 & \cos\gamma_3 \cos\alpha_3 \end{bmatrix}$$

$\alpha_1$, $\alpha_2$, $\alpha_3$ désignant les angles de rotation des systèmes de coordonnées des détecteurs autour du deuxième axe du système de coordonnées de référence, $\beta_1$, $\beta_2$, $\beta_3$ les angles de rotation des systèmes de coordonnées des détecteurs autour du troisième axe du système de coordonnées de référence et $\gamma_1$, $\gamma_2$, $\gamma_3$ les angles de rotation des systèmes de coordonnées des détecteurs autour du premier axe du système de coordonnées de référence,

- le microprocesseur étant configuré de manière à calculer, à partir du vecteur ($\overline{S}$) de la lumière incidente, l'angle d'élévation ($\Phi$), l'angle plat ($\varphi$) et l'intensité du rayonnement (I) du soleil par rapport au système de coordonnées de référence, l'angle d'élévation étant

$$\phi = \arctan\left(\frac{\sqrt{S_x^2 + S_y^2}}{S_z}\right),$$

l'angle plat

$$\varphi = \arctan\left(\frac{S_y}{S_x}\right)$$

et l'intensité du rayonnement

$$I = \sqrt{S_x^2 + S_y^2 + S_z^2}\ .$$

2. Dispositif selon la revendication précédente, **caractérisé en ce qu'**à chacun des détecteurs est associé un système de coordonnées de détecteur qui est décalé d'un vecteur ($\overline{E}_1$, $\overline{E}_2$, $\overline{E}_3$) par rapport au système de coordonnées de référence associé au dispositif et qui est mis en rotation au moyen d'une matrice de rotation ($R_1$, $R_2$, $R_3$).

3. Dispositif selon la revendication précédente, **caractérisé en ce que** les premiers axes ($x_1$, $x_2$, $x_3$) et les deuxièmes axes ($y_1$, $y_2$, $y_3$) du système de coordonnées de détecteur se trouvent dans la surface sensible au rayonnement des détecteurs et les troisièmes axes ($z_1$, $z_2$, $z_3$) du système de coordonnées de détecteur forment les normales sur les surfaces sensibles au rayonnement.

4. Dispositif selon la revendication 2 ou 3, **caractérisé en ce que** les systèmes de coordonnées de détecteur sont pivotés autour du troisième axe du système de coordonnées de référence de 120° chacun l'un par rapport à l'autre.

5. Dispositif selon l'une des revendications 2 à 4, **caractérisé en ce que** les systèmes de coordonnées de détecteur sont pivotés autour de leurs deuxièmes axes ($y_1$, $y_2$, $y_3$) des mêmes angles ($\alpha_1$, $\alpha_2$, $\alpha_3$) de préférence de 10 à 30° par rapport au deuxième axe (y) du système de coordonnées de référence.

6. Dispositif selon l'une des revendications précédentes, **caractérisé en ce que** les angles ($\alpha_1$, $\alpha_2$, $\alpha_3$) sont de 20°.

7. Dispositif selon l'une des revendications précédentes, **caractérisé en ce que** les détecteurs ($D_1$, $D_2$, $D_3$) sont formés par des composants de détection.

8. Dispositif selon l'une des revendications 1 à 6, **caractérisé en ce que** les détecteurs sont formés par des composants de détection et par d'autres composants.

9. Dispositif selon la revendication 2 ou 3, **caractérisé en ce que** les composants de détection sont des photodiodes.

10. Dispositif selon l'une des revendications précédentes, **caractérisé en ce que** les détecteurs ($D_1$, $D_2$, $D_3$), dans une première branche, sont respectivement branchés électriquement en parallèle avec une deuxième branche comprenant un condensateur ($C_{D1}$, $C_{D2}$, $C_{D3}$).

**11.** Dispositif selon l'une des revendications précédentes, **caractérisé en ce que** les premières branches sont respectivement branchées électriquement en parallèle avec une troisième branche comprenant une résistance ohmique réglable ($R_{31}$, $R_{32}$, $R_{33}$).

**12.** Dispositif selon la revendication 11, **caractérisé en ce qu'**une résistance ohmique ($R_{41}$, $R_{42}$, $R_{43}$) est branchée en série avec la résistance réglable ($R_{31}$, $R_{32}$, $R_{33}$) de la troisième branche.

**13.** Dispositif selon l'une des revendications précédentes, **caractérisé en ce qu'**une quatrième branche comprenant une résistance ohmique réglable ($R_{11}$, $R_{12}$, $R_{13}$) est branchée en série avec chaque première et éventuellement avec chaque deuxième ou troisième branche.

**14.** Dispositif selon la revendication 13, **caractérisé en ce qu'**une résistance ohmique ($R_{21}$, $R_{22}$, $R_{23}$) est branchée en série avec la résistance variable ($R_{11}$, $R_{12}$, $R_{13}$) de la deuxième branche.

**15.** Dispositif selon la revendication 13 ou 14, **caractérisé en ce que** les circuits série (1, 2, 3) composés de la quatrième branche et de la première branche ainsi qu'éventuellement de la deuxième branche et de la troisième branche sont raccordés à une source de tension délivrant une tension de service ($U_{VCC}$).

**16.** Dispositif selon la revendication précédente, **caractérisé en ce que** la tension de service $U_{VCC}$ est égale à 5 V.

**17.** Dispositif selon l'une des revendications 13 à 16, **caractérisé en ce qu'**un condensateur ($C_{VCC}$) est branché en parallèle avec les circuits série (1, 2, 3) composés de la quatrième branche et de la première branche ainsi qu'éventuellement de la deuxième branche et de la troisième branche.

**18.** Dispositif selon l'une des revendications précédentes, **caractérisé en ce que** les détecteurs ($D_1$, $D_2$, $D_3$) sont disposés sur un moyen de maintien.

**19.** Dispositif selon la revendication 18, **caractérisé en ce que** le moyen de maintien présente des surfaces sur lesquelles sont disposés les détecteurs ($D_1$, $D_2$, $D_3$).

**20.** Dispositif selon la revendication 19, **caractérisé en ce que** les surfaces sont disposées parallèlement à la surface sensible au rayonnement des détecteurs ($D_1$, $D_2$, $D_3$).

**21.** Dispositif selon l'une des revendications précédentes, **caractérisé en ce que** le dispositif présente un boîtier au moins partiellement transparent à la lumière.

**22.** Dispositif selon l'une des revendications précédentes, **caractérisé en ce que** les grandeurs de sortie électriques ($U_{a1}$, $U_{a2}$, $U_{a3}$) des détecteurs ($D_1$, $D_2$, $D_3$) sont appliquées au microprocesseur.

**23.** Dispositif selon l'une des revendications précédentes, **caractérisé en ce que** les grandeurs de sortie électriques ($U_{a1}$, $U_{a2}$, $U_{a3}$) des détecteurs ($D_1$, $D_2$, $D_3$) sont appliquées au microprocesseur en intercalant des convertisseurs analogique/numérique.

**24.** Procédé pour détecter la position du soleil par rapport à un système de coordonnées de référence et l'intensité du rayonnement (I) du soleil au moyen d'un dispositif selon la revendication 1 et notamment au moyen d'un dispositif selon l'une des revendications 1 à 23, **caractérisé par** l'étape suivante :

les grandeurs de sortie électriques ($U_{a1}$, $U_{a2}$, $U_{a3}$) générées par les détecteurs sont acheminées à un microprocesseur qui multiplie un vecteur ($\overline{U}_a$) formé à partir des grandeurs de sortie par la matrice inverse ($A^{-1}$) d'une matrice (A) afin d'obtenir le vecteur ($\overline{S}$) de la lumière incidente dans le système de coordonnées de référence, avec

$$A=\begin{bmatrix} \cos\gamma_1\sin\alpha_1\cos\beta_1+\sin\gamma_1\sin\beta_1 & \cos\gamma_1\sin\alpha_1\sin\beta_1-\sin\gamma_1\cos\beta_1 & \cos\gamma_1\cos\alpha_1 \\ \cos\gamma_2\sin\alpha_2\cos\beta_2+\sin\gamma_2\sin\beta_2 & \cos\gamma_2\sin\alpha_2\sin\beta_2-\sin\gamma_2\cos\beta_2 & \cos\gamma_2\cos\alpha_2 \\ \cos\gamma_3\sin\alpha_3\cos\beta_3+\sin\gamma_3\sin\beta_3 & \cos\gamma_3\sin\alpha_3\sin\beta_3-\sin\gamma_3\cos\beta_3 & \cos\gamma_3\cos\alpha_3 \end{bmatrix}$$

**25.** Utilisation d'un dispositif selon l'une des revendications 1 à 23 pour détecter la position ($\Phi$, $\varphi$) du soleil par rapport à un système de coordonnées de référence et l'intensité du rayonnement (I) du soleil.

## Fig. 1

## Fig. 2

Fig. 3a

Fig. 3b

Fig. 3c

# Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5072105 A
- EP 0930512 B1